# EUROPÄISCHE PATENTSCHRIFT

(11) **EP 4 399 046 B1**
(45) Veröffentlichungstag und Bekanntmachung des Hinweises auf die Patenterteilung: **14.05.2025**
(21) Anmeldenummer: 22772434.1
(22) Anmeldetag: 26.08.2022
(51) Int. Cl.: B23F 23/00, B23F 23/12, B23Q 17/22, G05B 19/401

(54) **WERKZEUGMASCHINE MIT KALIBRIERVORRICHTUNG ZUR KALIBRIERUNG EINES EINZENTRIERSENSORS**
MACHINE TOOL WITH CALIBRATING DEVICE FOR CALIBRATING A CENTRING SENSOR
MACHINE-OUTIL AYANT UN DISPOSITIF D'ÉTALONNAGE POUR ÉTALONNER UN CAPTEUR DE CENTRAGE

(30) Priorität: 10.09.2021 CH 0702592021
(43) Veröffentlichungstag der Anmeldung: 17.07.2024
(73) Patentinhaber: Reishauer AG, 8304 Wallisellen (CH)
(72) Erfinder: SENNHAUSER, Erwin, 8451 Kleinandelfingen (CH); MARX, Hartmut, 8304 Wallisellen (CH); BACHL, Franz, 8304 Wallisellen (CH); WINKLER, Lorenz, 8400 Winterthur (CH)
(74) Vertreter: Detken, Andreas
(86) Internationale Anmeldenummer: PCT/EP2022/073814
(87) Internationale Veröffentlichungsnummer: WO 2023/036630

(56) Entgegenhaltungen:
- EP-A1- 3 345 707
- EP-A1- 3 456 453
- WO-A1-2021/008915
- DE-A1- 102013 003 585
- DE-A1- 102019 104 812
- DE-A1- 3 234 241
- DE-C1- 3 615 365
- US-A- 5 297 055
- US-A1- 2012 130 531

## Beschreibung

### TECHNISCHES GEBIET

Die vorliegende Erfindung betrifft eine Werkzeugmaschine für die Bearbeitung vorverzahnter Werkstücke, welche eine Kalibriervorrichtung aufweist, die zur Kalibrierung eines Einzentriersensors der Werkzeugmaschine ausgebildet ist. Eine derartige Werkzeugmaschine gemäß dem Oberbegriff des Anspruchs 1 ist aus dem Dokument WO 2021/008915 A1 bekannt.

### STAND DER TECHNIK

Bei der Feinbearbeitung von vorverzahnten Werkstücken müssen vor Beginn jeder Bearbeitung das Werkzeug und das zu bearbeitende Werkstück derart zueinander ausgerichtet werden, dass das Werkzeug kollisionsfrei in die Zahnlücke des Werkstückes eintauchen kann. Diese Prozedur ist in der Fachwelt als "Einzentrieren" bekannt.

Ein solches Einzentrieren ist insbesondere bei kontinuierlich arbeitenden Wälzbearbeitungsverfahren erforderlich. Bei solchen Verfahren wird das zu bearbeitende Werkstück mit einem schneckenförmigen Werkzeug in Eingriff gebracht und in Wälzkopplung mit dem Werkzeug bearbeitet. Bei modernen, NC-gesteuerten Verzahnmaschinen wird dazu das Werkstück auf einer NC-gesteuerten, drehangetriebenen Werkstückspindel aufgespannt. Das Werkzeug wird auf einer ebenfalls NC-gesteuerten, drehangetriebenen Werkzeugspindel aufgespannt. Die Wälzkopplung zwischen Werkzeugspindel und Werkstückspindel wird dann elektronisch durch die NC-Steuerung hergestellt. Auch bei anderen Verfahren als Wälzbearbeitungsverfahren, z.B. beim Profilschleifen, ist eine genaue Kenntnis der Lage der Zahnlücken des zu bearbeitenden Werkstücks erforderlich.

Üblicherweise werden zum Einzentrieren berührungslose Einzentriersensoren verwendet, welche auf induktiver oder kapazitiver Basis arbeiten und die Lage der Zahnflanken bestimmen, während sich das Werkstück dreht. Der Wälzkopplungswinkel wird aufgrund einer solchen berührungslosen Messung elektronisch festgelegt.

Ein derartiges berührungsloses Einzentrierverfahren ist z.B. aus der DE 36 15 365 C1 bekannt. Bei diesem Verfahren wird das zu bearbeitende Werkstück in Drehung versetzt, und es wird die Phasenlage von Signalen bestimmt, die entstehen, wenn die Zähne des Werkstücks an einem feststehenden Einzentriersensor vorbeistreichen. Diese Phasenlage wird mit der Phasenlage verglichen, die in einer Referenzmessung mit einem Zahnrad bekannter Orientierung ermittelt wurde. Entsprechend der Differenz dieser Phasenlagen wird der Wälzkopplungswinkel zwischen Werkstück und Werkzeug eingestellt.

Anhand der Phasenlage der Signale aller Zähne über eine Werkstückdrehung hinweg können auch noch andere Prüfungen vorgenommen werden. Beispielweise kann eine Prüfung auf Vorbearbeitungsfehler und Rundlaufabweichungen erfolgen, und es kann anhand der Zahnlückenweite eine Abschätzung des vorhandenen Aufmasses erfolgen.

Die vom Einzentriersensor ermittelte Phasenlage hängt im Allgemeinen von der Position des Einzentriersensors relativ zum Werkstück ab. Wenn sich beispielsweise zwischen der Referenzmessung und der Messung an einem zu bearbeitenden Werkstück die Position des Einzentriersensors relativ zum Zahnrad in tangentialer Richtung, bezogen auf die Drehachse des Zahnrads, ändert, entspricht die ermittelte Phasenlage nicht mehr der tatsächlichen Lage der Zähne. Dies führt dazu, dass bei der anschliessenden Bearbeitung von den rechten Zahnflanken mehr Material als erwünscht und von den linken Zahnflanken weniger Material als erwünscht abgetragen wird oder umgekehrt. Im Extremfall erfolgt von einem Teil der Zahnflanken überhaupt kein Materialabtrag mehr. Bei Schrägverzahnungen hängt die ermittelte Phasenlage zudem auch von der axialen Position des Einzentriersensors entlang der Drehachse des Zahnrads ab. Abweichungen bezüglich der radialen Position des Einzentriersensors relativ zur Drehachse können dazu führen, dass die Zahnlückenweite bzw. das vorhandene Aufmass über- oder unterschätzt wird.

Für eine ordnungsgemässe Funktion eines Einzentriersensors ist es daher wichtig, dass die räumliche Position des Einzentriersensors relativ zur Werkstückspindel von Messung zu Messung immer dieselbe ist. Allerdings ist das nicht immer einfach sicherzustellen. Beispielsweise kann sich diese Position des Einzentriersensors im Betrieb der Verzahnmaschine aufgrund von thermischen Ausdehnungen verändern. Das gilt in besonderem Masse dann, wenn der Einzentriersensor bauartbedingt nicht in unmittelbarer Nähe der Werkstückspindel an der Maschine montiert ist. Besonders herausfordernd wird eine reproduzierbare Positionierung des Einzentriersensors dann, wenn der Einzentriersensor relativ zur Werkstückspindel beweglich ist. Beispielsweise kann sich der Einzentriersensor an einem Werkzeugträger der Maschine befinden und gemeinsam mit dem Werkzeug relativ zur Werkstückspindel bewegbar sein. Es ist daher wünschenswert, die exakte räumliche Position des Einzentriersensors relativ zur Werkstückspindel feststellen zu können, um den Einzentriersensor relativ zur Werkstückspindel reproduzierbar positionieren zu können.

Zudem müssen Einzentriersensoren häufig getauscht werden, z.B. um einen defekten Einzentriersensor zu ersetzen. Die Einzentriersensoren weisen aber nicht immer genau dasselbe Ansprechverhalten auf. Wenn es sich beispielsweise beim Einzentriersensor um einen Einzentriersensor handelt, der einen Schaltbereich aufweist, wobei ein Vorhandensein von Material innerhalb des Schaltbereichs durch eine Veränderung des vom Einzentriersensor ausgegebenen Ausgangssignal angezeigt wird, so kann die genaue Form und Lage des Schaltbereichs bezüglich einer Einzentriersensoroberfläche von Einzentriersensor zu Einzentriersensor variieren. Es ist daher wünschenswert, das Ansprechverhalten des Einzentriersensors ermitteln zu können, um den Einzentriersensor zu kalibrieren und entsprechend das Ansprechverhalten bei der Positionierung des Einzentriersensors relativ zur Werkstückspindel mitberücksichtigen zu können.

In der DE102019104812A1 wird ein Messtaster oder berührungslos arbeitendes Messelement eingesetzt, um das effektive Aufmass auf Zahn- oder Profilflanken zu ermitteln. Zusätzlich wird die Verwendung eines Schaltsignale ausgebenden, induktiven Einzentriersensors vorgeschlagen, um in Kombination des Einzentriersensors mit dem Messtaster bzw. dem berührungslos arbeitenden Messelement einen weiter optimierten Verfahrensablauf zu realisieren. Die Positionierung des Messtasters bzw. des berührungslos arbeitenden Messelements erfolgt bevorzugt über eine Linearachse der Schleifmaschine. Das Dokument offenbart, dass nach einer Kalibrierung des Messtasters mittels eines Referenzkörpers bekannter Geometrie (z. B. Kugel mit bekanntem Durchmesser) der Messtaster mittels der Linearachse gezielt in die benötigte Position verfahren werden kann. Die erfassten Messwerte des Messtasters bzw. des berührungslos arbeitenden Messelements werden von der Maschinensteuerung erfasst und in an sich bekannter Weise verarbeitet, um bezüglich der Verzahnung bzw. Profilierung die optimale Mittenposition des Werkstücks relativ zum Schleifwerkzeug zu finden. Eine Kalibrierung des induktiven, schaltenden Einzentriersensors wird in diesem Dokument allerdings nicht erwähnt.

### DARSTELLUNG DER ERFINDUNG

Es ist daher eine Aufgabe der vorliegenden Erfindung, eine Werkzeugmaschine für die Bearbeitung vorverzahnter Werkstücke mit einer Kalibriervorrichtung anzugeben, welche zur Kalibrierung der räumlichen Position eines in der Werkzeugmaschine verwendeten Einzentriersensors geeignet ist.

Die Aufgabe wird durch eine Werkzeugmaschine mit den Merkmalen des Anspruchs 1 gelöst. Weitere Ausführungsformen sind in den abhängigen Ansprüchen angegeben.

Es wird also eine Werkzeugmaschine für die Bearbeitung vorverzahnter Werkstücke angegeben. Dieses weist auf:
einen Werkstückträger;
eine auf dem Werkstückträger angeordnete Werkstückspindel, welche eine Werkstückspindelachse definiert, wobei die Werkstückspindel ein Werkstückspindelgehäuse und eine im Werkstückspindelgehäuse um die Werkstückspindelachse rotierbare Werkstückspindelwelle zum rotatorischen Antrieb eines zu bearbeitenden vorverzahnten Werkstücks aufweist, und
einen Einzentriersensor, welcher dazu ausgebildet ist, eine Phasenlage von Zähnen des Werkstücks zu ermitteln, wenn das Werkstück um die Werkstückspindelachse rotiert. Die Werkzeugmaschine weist ausserdem ein Kalibrierstück auf, das sich an einem definierten Kalibierort relativ zur Werkstückspindel befindet, sowie eine Sensorsteuerung, die dazu ausgebildet ist, folgendes Verfahren auszuführen:
Bewegen des Einzentriersensors relativ zur Werkstückspindel in eine Kalibrierposition, in der sich der Einzentriersensor beim Kalibrierstück befindet;
Ermitteln eines Ansprechverhaltens des Einzentriersensors, indem die Sensorsteuerung den Einzentriersensor relativ zum Kalibrierstück bewegt und währenddessen Sensorkalibriersignale des Einzentriersensors aufnimmt, und
Bewegen des Einzentriersensors in eine Werkstückmessposition, in der sich der Einzentriersensor beim Werkstück befindet, wobei die Werkstückmessposition vom ermittelten Ansprechverhalten abhängt.

Das Bewegen des Einzentriersensors relativ zum Kalibrierstück kann Bewegungen in eine axiale Richtung und/oder in eine radiale Richtung und/oder in eine tangentiale Richtung bezüglich der Werkstückspindel beinhalten.

Je nach Anordnung in der Werkzeugmaschine kann das Kalibrierstück unterschiedliche Formen und Strukturen aufweisen. Allen Ausführungsformen des Kalibrierstücks der vorliegenden Erfindung ist gemeinsam, dass sie eine Ermittlung des Ansprechverhaltens des Sensors ermöglichen. Wird der Einzentriersensor während des Verfahrens zur Kalibrierung beispielsweise in tangentialer oder axialer oder radialer Richtung bezüglich der Werkstückspindel entlang des Kalibrierstücks bewegt, so weist das Kalibrierstück entlang besagter Richtung bevorzugt mindestens eine Struktur, wie beispielsweise eine Kante oder eine Stufe, auf, welche als eine Änderung in einem Ausgangssignal des Einzentriersensors erkannt werden kann.

Für eine optimale Kalibrierung wird der Sensor während des Kalibrierverfahrens in all diejenigen Richtungen entlang des Kalibrierungsstücks bewegt, in welchen der Einzentriersensor bewegbar ist.

Mehrere Möglichkeiten, das Kalibrierstück in der Werkzeugmaschine anzuordnen, sind denkbar. Bevorzugt ist das Kalibrierstück derart in der Werkzeugmaschine angeordnet, dass der Einzentriersensor kollisionsfrei von der Kalibrierposition in die Werkstückmessposition (und umgekehrt) bewegt werden kann, selbst wenn bereits ein Bearbeitungswerkzeug in der Werkzeugmaschine eingespannt ist.

Das Kalibrierstück kann beispielsweise am Werkstückträger angeordnet sein. Der Werkstückträger kann ein verfahrbarer Schlitten sein, auf welchem sich die Werkstückspindel befindet. Das Kalibrierstück ist dann gemeinsam mit dem Werkstückträger verfahrbar und befindet sich stets in einer definierten Position relativ zum Werkstückträger. Vorzugsweise ist das Kalibrierstück derart angeordnet, dass es einem zum Einspannen eines Bearbeitungswerkzeugs und/oder eines Werkstücks optional eingesetzten Greifarm nicht im Weg steht.

Insbesondere kann das Kalibrierstück an einem feststehenden Teil der Werkstückspindel, insbesondere am Werkstückspindelgehäuse, angeordnet sein.

Stattdessen kann das Kalibrierstück aber auch an einem rotierbaren Teil der Werkstückspindel angeordnet sein.

Durch eine Anordnung des Kalibrierstücks an einem feststehenden oder rotierbaren Teil der Werkstückspindel ergibt sich der Vorteil, dass sich das Kalibrierstück nahe am zu bearbeitenden Werkstück befindet, wodurch allfällige Kalibrierungenauigkeiten reduziert werden.

Die Werkstückspindel kann ein Spannmittel zum Aufspannen eines Werkstücks auf der Werkstückspindelwelle aufweisen. In einem solchen Fall kann das Kalibrierstück am Spannmittel angeordnet sein. Dabei kann das Kalibrierstück derart ausgebildet sein, dass es lösbar am Spannmittel befestigbar ist.

Das Kalibrierstück kann weiter derart ausgebildet sein, dass es durch eine automatische Werkstückbeladevorrichtung auf dem Spannmittel anbringbar und vom Spannmittel entfernbar ist.

Besonders geeignet, um am Spannmittel befestigt zu werden, sind vorzugsweise scheibenförmige Kalibrierstücke, welche ein Aussenprofil mit mindestens einer Zahnstruktur, beispielsweise einem Kalibrierzahn oder einer Kalibrierzahnlücke aufweisen. Beispielsweise kann es sich bei dem Kalibrierstück um ein Referenzwerkstück handeln, das auf der Werkstückspindel aufspannbar ist. Das Kalibrierstück kann auch ein zu bearbeitendes oder frisch bearbeitetes Werkstück sein.

Eine Anordnung, bei welcher das Kalibrierstück auf der Werkstückspindel aufgespannt ist, minimiert die Distanz zwischen Werkstückmessposition und Kalibrierposition, wodurch der Einzentriersensor zur Kalibrierung nur um kurze Distanzen bewegt werden muss, was den Einsatz präziser Positioniermechanismen erlaubt. Andererseits muss das Kalibrierstück vor der Bearbeitung des Werkstücks jeweils in das Spannmittel eingesetzt und nach der Kalibrierung des Einzentriersensors wieder entfernt werden, was einen höheren Zeitaufwand mit sich bringt, als bei der Kalibrierung mit einem Kalibrierstück, welches permanent verbaut ist (beispielsweise am Werkzeugträger oder an einem feststehenden Teil der Werkzeugspindel). Ausserdem kann es erforderlich sein, zuerst eine Drehwinkellage des Kalibrierstücks um die Werkstückspindelachse herum zu ermitteln, bevor der Einzentriersensor kalibriert werden kann. Ist das Kalibrierstück das zu bearbeitende Werkstück, fällt der zusätzliche Zeitaufwand für das Einsetzen und Entfernen eines separaten Kalibrierstücks zwar weg, allerdings muss auch in einem solchen Fall in der Regel zumindest die Winkellage des Werkstücks erst anhand einer zusätzlichen Messung ermittelt werden.

Zur Ermittlung der Lage des Kalibrierstücks und/oder zu dessen Vermessung kann die Werkzeugmaschine ein Tastmittel aufweisen. Dieses kann insbesondere dazu ausgebildet sein, eine Lage mindestens einer Zahnstruktur eines scheibenförmigen Kalibrierstücks, beispielsweise eines Werkstücks, zu ermitteln.

Das Kalibrierstück kann beispielsweise einen im Wesentlichen quaderförmigen Grundkörper aufweisen.

Der Grundkörper des Kalibrierstücks kann eine erste Nut mit vorzugweise rechteckigem oder trapezförmigem Querschnitt aufweisen. Dadurch weist das Kalibrierstück verschiedene Kanten auf, welche sich in unterschiedliche Raumrichtungen erstrecken, was sich für ein berührungsloses Abtasten des Kalibrierstücks mit dem Einzentriersensor zwecks Ermittlung des Ansprechverhaltens gut eignet.

Bevorzugt ist das Kalibrierstück derart in der Werkzeugmaschine angeordnet, dass die erste Nut im Grundkörper des Kalibrierstücks senkrecht zur Werkstückspindelachse verläuft.

Der Grundkörper des Kalibrierstücks kann zudem eine zweite Nut mit vorzugweise rechteckigem oder trapezförmigem Querschnitt aufweisen, welche in einem Winkel, insbesondere senkrecht, zur ersten Nut verläuft und in die erste Nut mündet. Durch diese zweite Nut wird ein Einschnitt gebildet, welche die Form einer Zahnlücke am Werkstück imitiert und daher eine besonders geeignete Form zur Kalibrierung des Einzentriersensors darstellt.

Weist das Kalibierstück wie oben beschrieben eine zweite Nut auf, durch welche ein zahnlückenartiger Einschnitt gebildet wird, ist es vorteilhaft, das Kalibrierstück derart in der Werkzeugmaschine anzuordnen, dass die zweite Nut im Grundkörper des Kalibrierstücks parallel zur Werkstückspindelachse verläuft, wodurch der zahnlückenartige Einschnitt des Kalibrierstücks im Koordinatensystem der Werkzeugmaschine eine ähnliche Orientierung aufweist wie die Zahnlücken eines geradverzahnten Werkstücks.

Das Kalibrierstück kann einen quaderförmigen Vorsprung aufweisen, welcher sich von einer Oberfläche eines Teils der Werkstückspindel radial erstreckt, wobei der quaderförmige Vorsprung von zwei Orientierungsflächen flankiert ist, und wobei die flankierenden Orientierungsflächen bezüglich einer tangentialen Richtung beidseitig zum Vorsprung angeordnet sind. Das Ansprechverhalten des Einzentriersensors wird bei einem solchen Kalibrierstück bevorzugt anhand des quaderförmigen Vorsprungs ermittelt. Die Orientierungsflächen können dazu dienen, die Werkstückspindel bezüglich einer Referenzfläche in der Werkzeugmaschine auszurichten, um eine definierte Orientierung des Kalibrierstücks zu erhalten.

Alternativ kann das Kalibierstück einen zylinderförmigen Grundkörper aufweisen, wobei der zylinderförmige Grundkörper eine Zylinderachse aufweist, welche bevorzugt senkrecht zur Werkstückspindelachse verläuft. Ein Kalibierstück mit einem solch zylinderförmigen Grundkörper ist insbesondere vorteilhaft, wenn in der Werkzeugmaschine schrägverzahnten Werkstück bearbeitet werden, da in einem solchen Fall der Einzentriersensor zur Ermittlung des Ansprechverhaltens in einer Richtung normal zu einer Zahnflanke des schrägverzahnten Werkstücks relativ zum Kalibrierstück bewegt werden kann.

Als weitere Alternative kann das Kalibrierstück auch einen kugelförmigen Grundkörper oder einen kalottenförmigen Grundkörper aufweisen. Kugel- oder kalottenförmige Grundkörper können besonders geeignet sein, um Eingriffswinkel und Schrägungswinkel des zu bearbeitenden Werkstücks zu simulieren.

Die Werkzeugmaschine kann einen Werkzeugträger aufweisen, an dem eine Werkzeugspindel zum rotatorischen Antrieb eines Bearbeitungswerkzeugs angeordnet ist, wobei der Einzentriersensor am Werkzeugträger angeordnet ist.

Die Sensorsteuerung kann ein integraler Teil einer Maschinensteuerung sein. Sie kann dazu ausgebildet sein, das Bewegen des Einzentriersensors relativ zur Werkstückspindel durch Bewegungen des Werkzeugträgers relativ zur Werkstückspindel zu bewirken.

Die Werkzeugmaschine kann zudem eine Sensorpositioniervorrichtung zur Positionierung des Einzentriersensors aufweisen, welche am Werkzeugträger angeordnet ist und gemeinsam mit dem Werkzeugträger relativ zur Werkstückspindel bewegbar ist, wobei die Sensorpositioniervorrichtung dazu ausgebildet ist, den Einzentriersensor relativ zum Werkzeugträger zu bewegen, und wobei die Sensorsteuerung dazu ausgebildet ist, das Bewegen des Einzentriersensors relativ zur Werkstückspindel durch Bewegungen des Werkzeugträgers relativ zur Werkstückspindel und/oder durch Bewegungen der Sensorpositioniervorrichtung relativ zum Werkzeugträger zu bewirken.

Die Sensorpositioniervorrichtung kann zudem einen Sensorpositionierarm aufweisen, der relativ zum Werkzeugträger bewegbar, insbesondere linear verschiebbar, ist.

Zusätzlich kann die die Sensorpositioniervorrichtung einen Sensorhalter zum Aufnehmen eines Sensorträgers aufweisen, wobei der Sensorträger ein Anschlagelement aufweist, wobei der Einzentriersensor eine Einzentriersensoroberfläche aufweist, und wobei der Einzentriersensor im Sensorträger derart montiert ist, dass die Einzentriersensoroberfläche in einem definierten Abstand zum Anschlagelement liegt.

Ein solcher Sensorträger bildet eine einheitliche Schnittstelle zum Sensorhalter für Einzentriersensoren unterschiedlicher Baugrösse. Muss der Einzentriersensor ausgewechselt werden, so kann er mitsamt Sensorträger aus dem Sensorhalter genommen werden. Ein neuer Einzentriersensor wird dann derart im Sensorträger eingebaut, dass seine Einzentriersensoroberfläche ebenfalls im selben definierten Abstand zum Anschlagelement liegt, was durch ein geeignetes Messmittel überprüft werden kann, bevor der Sensorträger wieder in den Sensorhalter eingebaut wird.

Beim Einzentriersensor handelt es sich bevorzugt um einen berührungslos arbeitenden induktiven oder einen kapazitiven Sensor. Einzentriersensoren basierend auf optischen Messprinzipien sind aber ebenfalls denkbar. Wird ein induktiver Sensor verwendet, so besteht das Kalibrierstück vorzugsweise aus einem elektrisch leitenden Material, insbesondere Stahl oder Aluminium, und/oder weist eine elektrisch leitende Oberfläche auf. Wird hingegen ein kapazitiver Sensor verwendet, so besteht das Kalibrierstück bevorzugt aus einem dielektrischen Material und/oder weist eine Oberfläche aus einem dielektrischen Material auf.

Der Einzentriersensor kann dazu ausgebildet sein, ein Schaltsignal auszugeben, wobei der Einzentriersensor einen sensorspezifischen Schaltbereich aufweist, und wobei der sensorspezifische Schaltbereich eine fiktive Sensorachse definiert. Dringt Material in den Schaltbereich ein, so verändert sich das Schaltsignal. Das Schaltsignal kann analog oder digital sein. Das Schaltsignal kann insbesondere ein binäres Schaltsignal sein, welches anzeigt, ob sich Material innerhalt des Schaltbereichs befindet: Falls ja, nimmt das binäre Schaltsignal einen ersten Wert, bevorzugt eine logische Eins, an, falls nein, nimmt das binäre Schaltsignal einen zweiten Wert, bevorzugt eine logische Null, an.

Der Kalibrierort des Kalibrierstücks ist vorzugsweise in einem Koordinatensystem des Werkstückträgers bekannt. Die Sensorsteuerung ist bevorzugt dazu ausgebildet, durch die Ermittlung des Ansprechverhaltens des Einzentriersensors am Kalibrierstück die Lage der fiktiven Sensorachse zu ermitteln.

In einem ersten Schritt kann ein Spitzenschaltpunkt des Schaltbereichs des Einzentriersensors ermittelt werden, indem der Einzentriersensor in normaler Richtung auf eine Stirnfläche des Kalibrierstücks zubewegt wird, wobei die Stirnfläche bevorzugt parallel zur Werkstückspindelachse angeordnet ist. Ist eine theoretische Lage des Einzentriersensors im Koordinatensystem des Werkstückträgers bereits bekannt, beispielweise, weil sie durch eine geometrische Messung in der Maschine ermittelt und in der Sensorsteuerung hinterlegt worden ist, so kann die Ermittlung des Spitzenschaltpunkts auch entfallen, da durch die bekannte theoretische Lage des Einzentriersensors letzterer direkt auf eine vordefinierte Kalibrierposition gefahren werden kann. Der Einzentriersensor kann sich allerdings auch in einer momentanen Lage befinden, welche von der theoretischen Lage abweicht; beispielsweise, wenn sich die Maschine in einem anderen Temperaturzustand befindet als während der Ermittlung der theoretischen Lage. Ebenso kann die momentane Lage des Einzentriersensors von der theoretischen Lage abweichen, wenn ein Einbaufehler des Einzentriersensors vorliegt. Durch die Ermittlung des Spitzenschaltpunkts im Koordinatensystem des Werkstückträgers kann ein solcher Einbaufehler erkannt werden.

Ist der Spitzenschaltpunkt (durch explizite Ermittlung oder aus einer Hinterlegung in der Sensorsteuerung) bekannt, kann der Einzentriersensor derart positioniert werden, dass eine Einzentriersensoroberfläche des Einzentriersensors um eine erste Messdistanz radial von der Stirnfläche des Kalibrierstücks beabstandet ist. Bevorzugt entspricht diese erste Messdistanz einer vordefinierten Messdistanz, welche auch zwischen der Einzentriersensoroberfläche und einem Kopfkreis des Werkstücks auftreten soll, wenn sich der Einzentriersensor in der Werkstückmessposition befindet. Nun kann der Einzentriersensor axial und/oder tangential relativ zum Kalibrierstück bewegt werden, um das Kalibrierstück berührungslos abzutasten. Währenddessen gibt der Einzentriersensor vorzugsweise Sensorkalibriersignale aus, aus welchen Flankenschaltpunkte ermittelt werden können, welche sich auf einer den Schaltbereich eingrenzenden Schaltgrenzfläche befinden. Aus diesen Flankenschaltpunkten kann anschliessend ein Zentralpunkt ermittelt werden, durch welchen eine fiktive Sensorachse gelegt werden kann, wobei die fiktive Sensorachse bevorzugt senkrecht zur Werkstückspindelachse und normal zur Stirnfläche des Kalibrierstücks durch den Zentralpunkt gelegt wird.

Alternativ können auch Flankenschaltpunkte bei einer weiteren Messdistanz ermittelt werden, wodurch weitere Zentralpunkte ermittelt werden können, durch welche eine weitere fiktive Sensorachse gelegt werden kann. Ebenfalls ist es denkbar, dass Flankenschaltpunkte bei mehr als zwei Messdistanzen ermittelt werden, so dass die gesamte Schaltgrenzfläche als solche virtuell rekonstruiert werden kann.

Die Sensorsteuerung ist vorzugsweise weiter dazu ausgebildet, die Werkstückmessposition aus dem bekannten Kalibrierort des Kalibrierstücks, einer vordefinierten Messachse und der ermittelten fiktiven Sensorachse derart zu berechnen, dass die ermittelte fiktive Sensorachse mit der vordefinierten Messachse zusammenfällt, wobei vorzugsweise einer der ermittelten Zentralpunkte auf einem Schnittpunkt der Messachse mit dem Kopfkreis des Werkstücks liegt, wenn sich der Einzentriersensor in der berechneten Werkstückmessposition befindet.

Dadurch, dass die ermittelte fiktive Sensorachse auf die Messachse zu liegen kommt, wird sichergestellt, dass die anschliessend am Werkstück gemessene Phasenlage idealerweise nur von den Eigenschaften des zu bearbeitenden Werkstücks abhängt und nicht durch einen ungewollten Versatz der fiktiven Sensorachse des Einzentriersensors bezüglich der Messachse verfälscht ist.

Der Kalibrierort des Kalibrierstücks und die vordefinierte Messachse können dabei in einem Speicher der Sensorsteuerung hinterlegt sein, wodurch das Verfahren automatisiert durchgeführt werden kann.

Beim Koordinatensystem des Werkstückträgers kann es sich um ein kartesisches Koordinatensystem mit einer X-, einer Y- und einer Z-Richtung handeln. Alternativ kann das Koordinatensystem des Werkstückträgers ein Kugel- oder Zylinderkoordinatensystem sein, oder ein anderes Koordinatensystem, welches eine eindeutige Darstellung der Lage eines Punktes im Raum ermöglicht.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1a, 1b: in perspektivischer Ansicht eine Ausführungsform einer Werkzeugmaschine für die Bearbeitung vorverzahnter Werkstücke gemäss der vorliegenden Erfindung;
- Fig. 2a-2d: in perspektivischer Ansicht fünf verschiedene Ausführungsformen eines Kalibrierstücks gemäss der vorliegenden Erfindung;
- Fig. 2e: in perspektivischer Ansicht eine Werkzeugmaschine gemäss der vorliegenden Erfindung mit einer sechsten Ausführungsform des Kalibrierstücks;
- Fig. 2f: in einer vergrösserten perspektivischen Ansicht die sechsten Ausführungsform des Kalibrierstücks der Fig. 2e;
- Fig. 2g: in einer Seitenansicht eine Werkzeugmaschine gemäss der vorliegenden Erfindung mit einer siebten Ausführungsform des Kalibrierstücks;
- Fig. 2h: in einer vergrösserten Seitenansicht die siebte Ausführungsform des Kalibrierstücks der Fig. 2g;
- Fig. 3a,3b: eine bevorzugte Anordnung eines Kalibrierstücks in einer Werkzeugmaschine gemäss der vorliegenden Erfindung;
- Fig. 3c: einen Sensorhalter zum Aufnehmen des Einzentriersensors;
- Fig. 4a-4d: in schematischer (nicht massstabgetreuer) Weise ein Verfahren zur Kalibrierung eines Einzentriersensors gemäss der vorliegenden Erfindung;
- Fig. 5: ein Flussdiagramm, das ein Verfahren gemäss einer Ausführungsform der vorliegenden Erfindung illustriert.

### BESCHREIBUNG BEVORZUGTER AUSFÜHRUNGSFORMEN

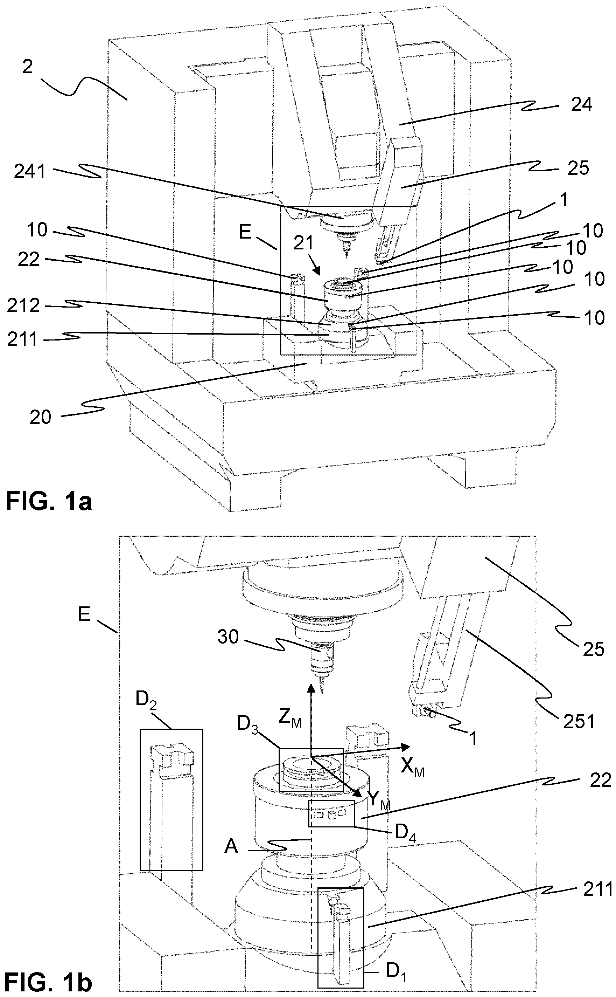

Die Figuren 1a und 1b zeigen in perspektivischer Ansicht eine Ausführungsform einer Werkzeugmaschine 2 für die Bearbeitung vorverzahnter Werkstücke, wobei Fig. 1b eine Vergrösserung des in Fig. 1a umrahmten Ausschnittes E zeigt. Insbesondere handelt es sich bei der hier dargestellten Ausführungsform um eine Werkzeugmaschine für die Wälzbearbeitung von Rotationsteilen mit nutförmigen Profilen. Eine solche Werkzeugmaschine ist in der Druckschrift WO2021008915A1 beschrieben.

Die Werkzeugmaschine 2 weist einen Werkstückträger 20 auf, eine auf dem Werkstückträger 20 angeordnete Werkstückspindel 21, welche eine Werkstückspindelachse A definiert, wobei die Werkstückspindel 21 ein Werkstückspindelgehäuse 211 und eine im Werkstückspindelgehäuse 211 um die Werkstückspindelachse A rotierbare Werkstückspindelwelle 212 zum rotatorischen Antrieb eines zu bearbeitenden vorverzahnten Werkstücks aufweist, sowie ein Spannmittel 22, wobei das Spannmittel 22 zur Aufnahme eines zu bearbeitenden Werkstücks ausgebildet ist. Ein auf den Werkstückträger 20 bezogenes, kartesisches Koordinatensystem K_{M} mit einer X_{M}-Richtung, einer Y_{M}-Richtung und einer Z_{M}-Richtung ist in Fig. 1b eingezeichnet, hier als Beispiel mit Ursprung auf der Werkstückspindelachse A. Der Werkstückträger 20 ist im hier gezeigten Ausführungsbeispiel ein in Y_{M}-Richtung verfahrbarer Werkstückschlitten. Die hier dargestellte Werkzeugmaschine 2 weist zudem eine Sensorpositioniervorrichtung 25 auf, welche an einem Werkzeugträger 24 angeordnet ist, wobei am Werkzeugträger 24 eine Werkzeugspindel 241 zum rotatorischen Antrieb eines Bearbeitungswerkzeugs angeordnet ist. Die Sensorpositioniervorrichtung 25 ist gemeinsam mit dem Werkzeugträger 24 in X_{M}-Richtung und in Z_{M}-Richtung bewegbar und weist einen in einer Y_{M}/Z_{M}-Ebene linear verschiebbaren Sensorpositionierarm 251 auf, in welchem der Einzentriersensor 1 angeordnet ist. Der Einzentriersensor 1 ist hier antiparallel zur Y_{M}-Richtung ausgerichtet. In Fig. 1a und 1b sind zu Illustrationszwecken verschiedene Ausführungsformen eines Kalibrierstücks 10 in derselben Werkzeugmaschine 2 angeordnet. In der Praxis hingegen ist es in der Regel ausreichend, wenn die Werkzeugmaschine nur eine dieser Ausführungsform des Kalibrierstücks 10 aufweist. Wie aus der Fig. 1b ersichtlich ist, sind die verschiedenen Ausführungsformen derart in der Werkzeugmaschine angeordnet, dass der Einzentriersensor 1 zur Ermittlung seines Ansprechverhaltens anhand der Sensorpositioniervorrichtung 25 entlang des Kalibrierstücks 10 bewegt werden kann, wobei der Einzentriersensor während der Bewegungen 1 hier stets antiparallel zur Y_{M}-Richtung ausgerichtet bleibt. Um eine Bewegung des Kalibrierstücks 10 relativ zum Einzentriersensor 1 in Y_{M}-Richtung zu erzielen, kann in der hier dargestellten Werkzeugmaschine 2 zudem auch der Werkstückträger 20 bewegt werden. Ebenfalls zu sehen ist ein am Werkzeugträger 24 angeordneter taktiler Taster 30, welcher zur Ermittlung des Kalibrierorts C_{M} des Kalibrierstücks 10 im Koordinatensystem K_{M} der Werkzeugmaschine 2 verwendet werden kann.

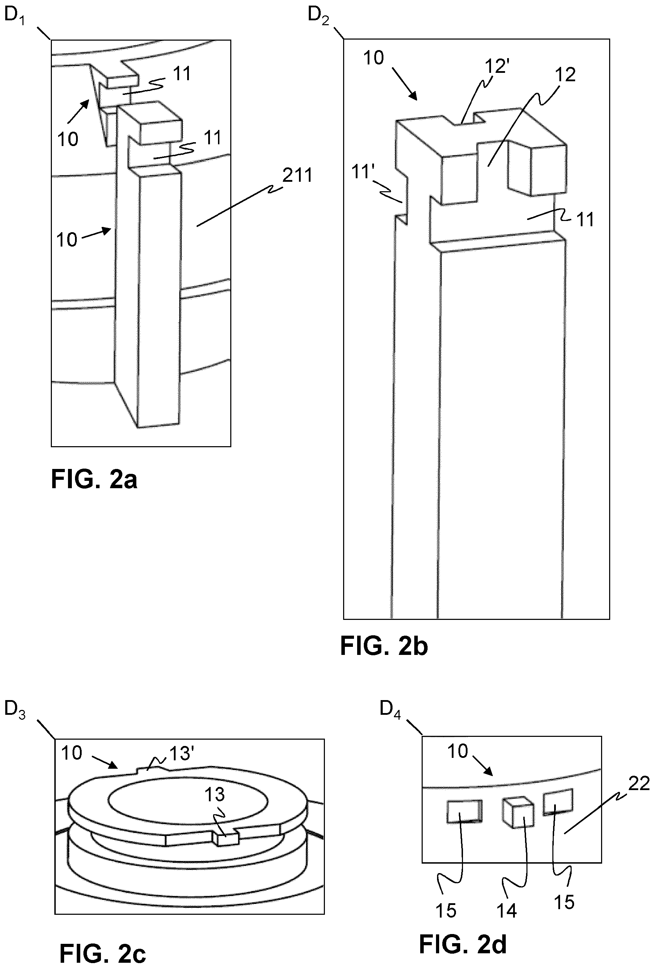

In den Figuren 2a-d sind die in den Figuren 1a und 1b gezeigten Ausführungsformen des Kalibrierstücks 10 vergrössert zu sehen.

In dem in Fig. 2a gezeigten Bildausschnitt D₁ der Fig. 1b sind zwei Ausführungsformen des Kalibrierstücks 10 zu sehen. Beide Ausführungsformen sind am Werkstückspindelgehäuse 211 angeordnet. Die im Bildausschnitt in einer vorderen Ebene gezeigte erste Ausführungsform weist einen quaderförmigen Grundkörper auf, wobei der Grundkörper eine erste Nut 11 mit einem rechteckigen Querschnitt aufweist, wobei die erste Nut 11 in X_{M}-Richtung verläuft. Die im Bildausschnitt in einer hinteren Ebene gezeigte zweite Ausführungsform ragt aus einer angeschrägten Oberfläche des Werkstückspindelgehäuses 211 hervor und weist ebenfalls eine erste, in X_{M}-Richtung verlaufende Nut 11 mit einem rechteckigen Querschnitt auf. Wie in Fig. 1b zu sehen ist, sind diese beide Ausführungsformen derart am Werkstückspindelgehäuse angeordnet, dass die Nut 11 in tangentialer Richtung bezüglich der Werkstückspindel 21 verläuft. Um das Ansprechverhalten des Einzentriersensors 1 zu ermitteln, kann der Einzentriersensor 1 auf einer die Nut 11 aufweisenden Seite des Kalibrierstücks 10 in tangentialer Richtung entlang der Nut 11 und/oder in Z_{M}-Richtung (was einer axialen Richtung bezüglich der Werkstückspindel 21 entspricht) und/oder in Y_{M}-Richtung (was einer radialen Richtung bezüglich der Werkstückspindel 21 entspricht) bewegt werden.

In dem in Fig. 2b gezeigten Bildausschnitt D₂ der Fig. 1b ist eine dritte Ausführungsform des Kalibrierstücks 10 zu sehen, welche am Werkstückträger 20 angeordnet ist. Die in Fig. 2b gezeigte dritte Ausführungsform weist einen quaderförmigen Grundkörper auf, wobei der Grundkörper eine erste Nut 11 mit einem rechteckigen Querschnitt aufweist. Der Grundkörper dieser dritten Ausführungsform des Kalibrierstücks 10 weist zudem eine zweite Nut 12 auf, welche senkrecht zur ersten Nut 11 verläuft und in die erste Nut 11 mündet, wobei besagte zweite Nut 12 einen trapezförmigen Querschnitt aufweist. Auf einer Seite des Kalibrierstücks 10, welcher der die Nut 11 aufweisenden Seite gegenüberliegt, weist das Kalibrierstück 10 eine weitere Nut 11' auf, die parallel zur Nut 11 verläuft. Senkrecht zur Nut 11' verläuft eine weitere Nut 12' mit rechteckigem Querschnitt, welche in die Nut 11' mündet. Wie aus der Fig. 1b zu erkennen ist, ist diese dritte Ausführungsform des Kalibrierstücks 10 derart am Werkstückschlitten angeordnet, dass die zweite Nut 12 parallel zur Werkstückspindelachse A verläuft, wodurch Form und Orientierung einer Zahnlücke in einem zu bearbeitenden Werkstück imitiert wird. Zur Ermittlung des Ansprechverhalten des Einzentriersensors 1 kann der Einzentriersensor 1 auf einer die Nuten 11 und 12 aufweisenden Seite des Kalibrierstücks 10 in tangentialer Richtung entlang der Nut 11 und/oder in Z_{M}-Richtung (was einer axialen Richtung bezüglich der Werkstückspindel 21 entspricht) und/oder in Y_{M}-Richtung (was einer radialen Richtung bezüglich der Werkstückspindel 21 entspricht) bewegt werden. Wie in Fig. 1b angedeutet kann diese Ausführungsform des Kalibrierstücks auch um 180° gedreht am Werkstückträger (20) angebracht sein, wodurch dann die Nut 12' mit dem rechteckigen Querschnitt während des Kalibrierverfahrens zum Einzentriersensor 1 hin ausgerichtet ist.

In dem in Fig. 2c gezeigten Bildausschnitt D₃ der Fig. 1b ist eine vierte Ausführungsform des Kalibrierstücks 10 zu sehen, welche lösbar im Spannmittel 22 angeordnet ist. Diese vierte Ausführungsform des Kalibrierstücks 10 ist scheibenförmig und weist ein Aussenprofil mit Kalibrierzähnen 13,13' auf. In dieser Ausführungsform befinden sich zwei Kalibrierzähne 13,13' einander radial gegenüber, wobei der erste Kalibrierzahn 13 eine rechteckige Form aufweist, während der zweite Kalibrierzahn 13 eine trapezförmige Form aufweist. Die Kalibrierzähne 13,13' sind in Y_{M}-Richtung ausgerichtet. Zur Ermittlung des Ansprechverhalten des Einzentriersensors 1 kann dieser in tangentialer Richtung bezüglich der Werkstückspindel (X_{M}-Richtung) bewegt werden, wodurch der antiparallel zur Y_{M}-Richtung ausgerichtete Einzentriersensor 1 einen der beiden Kalibrierzähne (hier derjenige mit der rechteckigen Form, 13) berührungslos abtasten kann. Wird ein Abtasten des Kalibrierzahns 13' (trapezförmige Form) bevorzugt, so kann das Kalibrierstück um 180° gedreht angeordnet werden.

In dem in Fig. 2d gezeigten Bildausschnitt D₄ der Fig. 1b ist eine fünfte Ausführungsform des Kalibrierstücks 10 zu sehen, welche am Spannmittel 22 angeordnet ist. Die fünfte Ausführungsform des Kalibrierstücks 10 weist einen quaderförmigen Vorsprung 14 auf, welcher sich von einer Oberfläche des Spannmittels 21 radial erstreckt, wobei der quaderförmige Vorsprung 14 von zwei in die Oberfläche des Spannmittels hineinragende Orientierungsflächen 15 flankiert ist. Im hier gezeigten Ausführungsbeispiel weist der Vorsprung in Y_{M}-Richtung und die flankierenden Orientierungsflächen 15 sind bezüglich der tangentialen Richtung beidseitig zum Vorsprung 14 derart angeordnet, dass die Orientierungsflächen 15 in der X_{M}/Z_{M}-Ebene liegen.

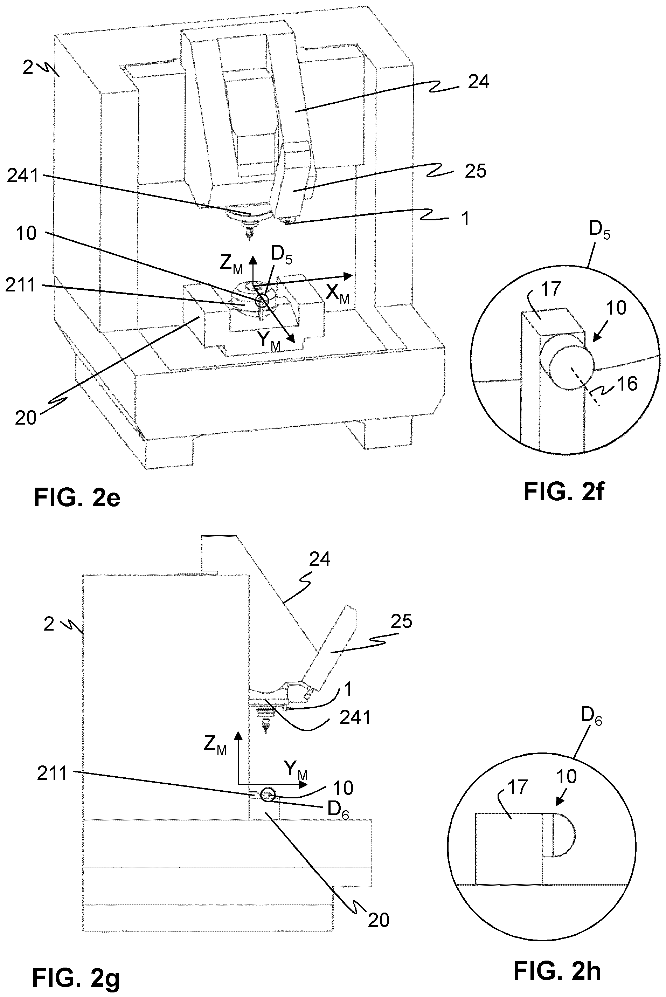

Fig. 2e zeigt eine perspektivische Ansicht einer Werkzeugmaschine 2 mit einer sechsten Ausführungsform des Kalibrierstücks, welche am Werkstückspindelgehäuse 211 angeordnet ist. Wie in der Vergrösserung des Bildausschnitts D₅ in der Fig. 2f zu sehen ist, weist diese sechste Ausführungsform des Kalibrierstücks einen zylindrischen Grundkörper auf, welcher an einem quaderförmigen Träger 17 angeordnet ist. Der zylindrische Grundkörper weist eine Zylinderachse 16 auf, welche hier parallel zur Y_{M}-Achse verläuft.

Fig. 2g zeigt Seitenansicht einer Werkzeugmaschine 2 mit einer siebten Ausführungsform des Kalibrierstücks, welche am Werkstückspindelgehäuse 211 angeordnet ist. Wie in der Vergrösserung des Bildausschnitts D₆ in der Fig. 2h zu sehen ist, weist diese siebte Ausführungsform des Kalibrierstücks einen kalottenförmigen Grundkörper auf, welcher an einem quaderförmigen Träger 17 angeordnet ist, wobei der kalottenförmige Grundkörper in Y_{M}-Richtung weist.

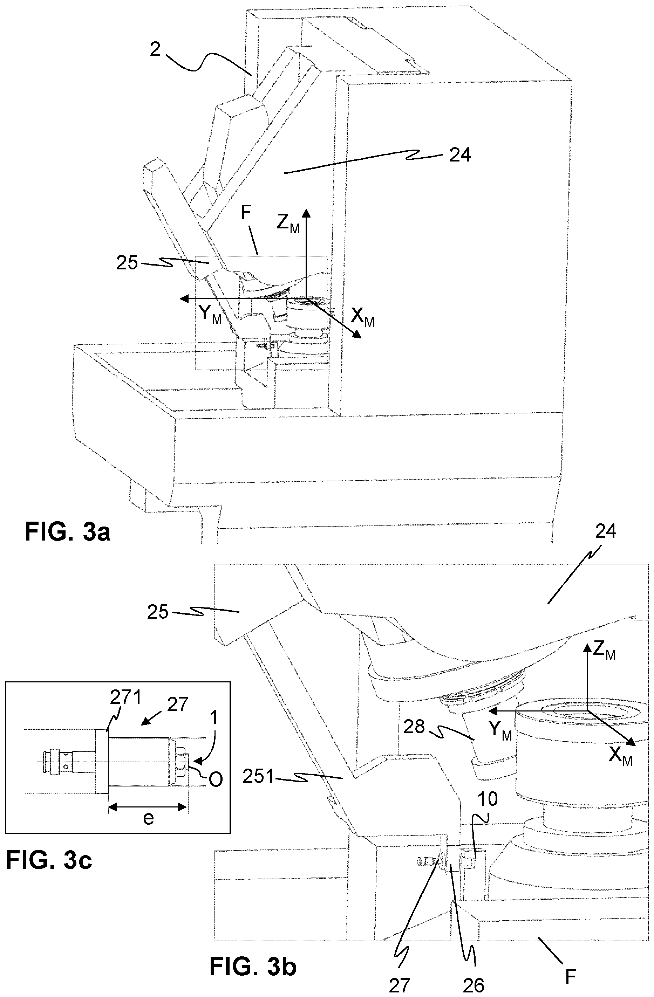

Fig. 3a und 3b zeigen eine bevorzugte Anordnung des Kalibrierstücks 10, welche der ersten Ausführungsform in Fig. 2a entspricht, in der Werkzeugmaschine 2, wobei Fig. 3b eine Vergrösserung des in Fig. 3a umrahmten Ausschnittes F zeigt. Der Sensorpositionierarm 251 weist einen Sensorhalter 26 auf, welcher eine mechanische Aufnahme für einen Sensorträger 27 bildet. Wie in Fig. 3c zu sehen ist, weist der Sensorträger 27 ein Anschlagelement 271 auf, welches als Positionierhilfe für die Montage des Sensorträgers 27 im Sensorhalter 26 dient. Der Einzentriersensor 1 weist eine Einzentriersensoroberfläche O auf und ist im Sensorträger 27 derart montiert, dass die Einzentriersensoroberfläche O in einem definierten Abstand e zum Anschlagelement 271 liegt. Ein solcher Sensorträger 27 bildet eine einheitliche Schnittstelle zum Sensorhalter 26 für Einzentriersensoren 1 unterschiedlicher Baugrösse. Muss der Einzentriersensor 1 ausgewechselt werden, so kann er mitsamt Sensorträger 27 aus dem Sensorhalter 26 genommen werden. Ein neuer Einzentriersensor wird dann derart im Sensorträger 27 eingebaut, dass seine Einzentriersensoroberfläche ebenfalls im selben definierten Abstand e zum Anschlagelement 271 liegt, was durch ein geeignetes Messmittel überprüft werden kann, bevor der Sensorträger 27 wieder in den Sensorhalter 26 eingebaut wird. Wie in den Figuren 3a und 3b zu erkennen ist, kann die Sensorpositioniervorrichtung 25 mit dem Einzentriersensor 1 im Sensorträger 26 trotz eines am Werkzeugträger 24 angeordneten Bearbeitungswerkzeugs 28 kollisionsfrei zum Kalibrierstück 10 bewegt werden, um das Kalibrierstück 10 entlang der Richtungen X_{M}, Y_{M} und Z_{M} berührungslos abzutasten, wobei der Einzentriersensor 1 antiparallel zur Y_{M}-Richtung ausgerichtet ist.

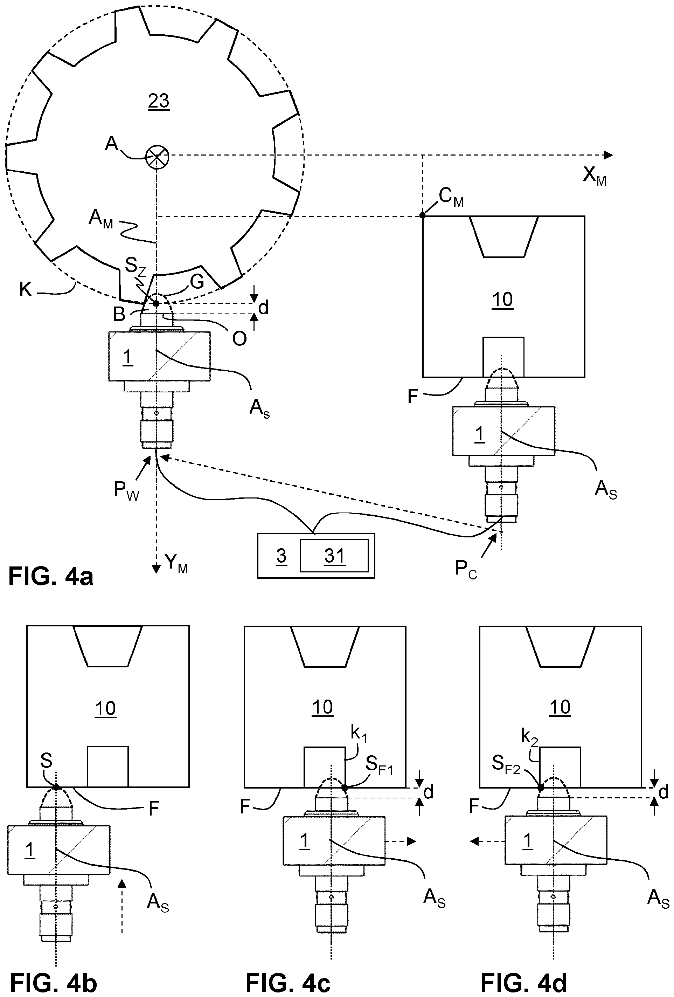

In den Figuren 4a-4d wird in schematischer (nicht massstabgetreuer) Weise ein Verfahren zur Kalibrierung eines berührungslos arbeitenden, Schaltsignale ausgebenden Einzentriersensors 1 gemäss der vorliegenden Erfindung illustriert. Der in diesem Ausführungsbeispiel gezeigte Einzentriersensor weist einen Schaltbereich B auf, welcher sich von einer Einzentriersensoroberfläche O bis zu einer hier gestrichelt dargestellten Schaltgrenzfläche G erstreckt und eine fiktive Sensorachse A_{S} definiert. Dringt Material in den Schaltbereich B ein, so ändert sich das Schaltsignal, welches der Einzentriersensor 1 ausgibt. Um die Phasenlage der Zähne eines vorverzahnten Werkstücks 23 mit Kopfkreis K zuverlässig bestimmen zu können, soll die Werkstückmessposition P_{W} so berechnet werden, dass ein möglichst symmetrisches Ansprechverhalten des Einzentriersensors 1 erreicht wird. Ein solch symmetrisches Ansprechverhalten wird erreicht, wenn die fiktive Sensorachse A_{S} mit einer vordefinierten Messachse A_{M} (hier parallel zur Y_{M}-Richtung in einer vordefinierten Höhe in Z_{M}-Richtung) zusammenfällt, und wenn die Einzentriersensoroberfläche O um eine vordefinierte Messdistanz d zum Kopfkreis K beabstandet ist, derart, dass der Kopfkreis K den Schaltbereich B durchkreuzt (siehe Fig. 4a).

Gemäss der vorliegenden Erfindung wird die fiktive Sensorachse A_{S} des Einzentriersensors 1 anhand des Kalibrierstücks 10 ermittelt, wobei das Kalibrierstück 10 eine bekannte Geometrie aufweist und sich an einem bekannten Kalibrierort C_{M} im Koordinatensystem K_{M} des Werkstückträgers befindet. Hierzu wird der Einzentriersensor 1 in die Nähe des Kalibrierstücks gebracht.

Mögliche Schritte eines Kalibrierverfahrens sind in den Figuren 4b-4d dargestellt:
In diesem Beispiel wird zunächst in einem ersten Schritt (Fig. 4b) ein Spitzenschaltpunkt S des Schaltbereichs ermittelt, indem eine Stirnfläche F des Kalibrierstücks 10 angefahren wird, wobei die Stirnfläche hier in der X_{M}-Z_{M}-Ebene liegt. Ist eine theoretische Lage des Einzentriersensors 1 im Koordinatensystem K_{M} des Werkstückträgers bereits bekannt, beispielweise, weil sie durch eine geometrische Messung in der Maschine ermittelt und in der Sensorsteuerung hinterlegt worden ist, so kann die Ermittlung des Spitzenschaltpunkts S auch entfallen, da durch die bekannte theoretische Lage des Einzentriersensors 1 letzterer direkt auf eine vordefinierte Kalibrierposition P_{C} gefahren werden kann. Der Einzentriersensor kann sich allerdings auch in einer momentanen Lage befinden, welche von der theoretischen Lage abweicht; beispielsweise, wenn sich die Maschine in einem anderen Temperaturzustand befindet als während der Ermittlung der theoretischen Lage. Ebenso kann die momentane Lage des Einzentriersensors von der theoretischen Lage abweichen, wenn ein Einbaufehler vorliegt; beispielsweise, wenn die Einzentriersensoroberfläche O nicht den in Fig. 3c gezeigten, vorgesehenen Abstand e vom Anschlagelement aufweist, oder wenn das Anschlagelement 271 des Sensorträgers 27 nicht bündig am Sensorhalterung 26 anliegend montiert worden ist. Durch die Ermittlung des Spitzenschaltpunkts S im Koordinatensystem K_{M} des Werkstückträgers können solche Einbaufehler erkannt werden.

In einem zweiten Schritt (Fig. 4c und Fig. 4d) wird der Einzentriersensor 1 antiparallel zur Y_{M}-Richtung näher an das Kalibrierstück 10 heran bewegt, idealerweise derart, dass die Einzentriersensoroberfläche O zur Stirnfläche F um die vordefinierte Messdistanz d beabstandet ist, welche dann auch zwischen der Einzentriersensoroberfläche O und einem Kopfkreis K des Werkstücks 23 auftreten soll, wenn sich der Einzentriersensor 1 (wie in Fig. 4a gezeigt) in der Werkstückmessposition P_{W} befindet.

In einem dritten Schritt werden nun Flankenschaltpunkte ermittelt, welche sich auf der Schaltgrenzfläche G des Schaltbereichs B des Einzentriersensors in X_{M}- und in Z_{M}-Richtung befinden. In einer einfachen Ausführungsform des Kalibrierverfahrens wird dieser dritte Schritt bei einer einzigen Messdistanz d in Y_{M}-Richtung durchgeführt, wobei in X_{M}-Richtung und in Z_{M}-Richtung bevorzugt je zwei Flankenschaltpunkt ermittelt werden. In der Fig. 4c ist als Beispiel zu sehen, wie der Einzentriersensor zur Ermittlung eines ersten Flankenschaltpunkts S_{F1} parallel zur X_{M}-Richtung an einer ersten Kante k₁ des Kalibrierstücks vorbeibewegt wird, während Fig. 4d zeigt, wie der Einzentriersensor zur Ermittlung eines zweiten Flankenschaltpunkts S_{F2} anti-parallel zur X_{M}-Richtung an einer zweiten Kante k₂ des Kalibrierstücks vorbeibewegt wird. Durch Bewegen des Einzentriersensors 1 entlang der Z_{M}-Richtung können in gleicher Weise zwei weitere Flankenschaltpunkte ermittelt werden. Die ermittelten Flankenschaltpunkte werden in einem Speicher 31 der Sensorsteuerung 3 gespeichert. Aus den gespeicherten Flankenschaltpunkten lässt sich dann ein theoretischer Zentralpunkt S_{Z} des Schaltbereichs B ermitteln. Durch diesen theoretischen Zentralpunkt S_{Z} wird eine fiktive Achse A_{S} gelegt, wobei diese fiktive Achse A_{S} normal zur X_{M}-/Z_{M}-Ebene steht.

Für die Messung am Werkstück wird der Einzentriersensor dann derart in die Werkstückmessposition P_{w} gebracht, dass diese fiktive Sensorachse A_{S} auf der gewünschten Messachse A_{M} zu liegen kommt, und zwar wie in Fig. 4a gezeigt idealerweise derart, dass der Zentralpunkt S_{Z} auf einem Schnittpunkt der Messachse A_{M} mit dem Kopfkreis K zu liegen kommt, womit ein möglichst symmetrisches Ansprechverhalten des Einzentriersensors 1 erreicht wird.

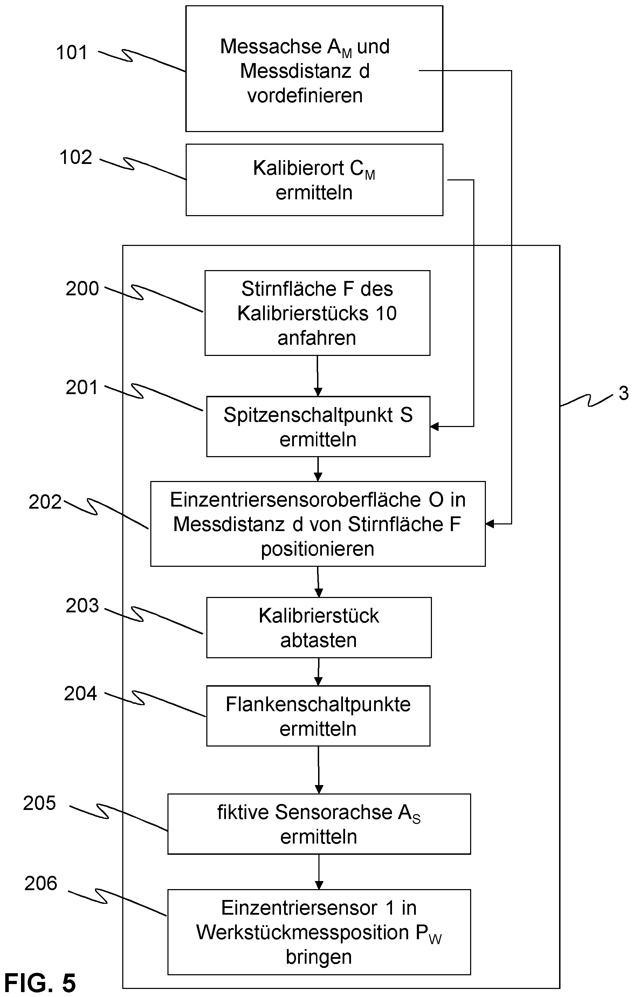

Fig. 5 zeigt das oben beschriebene Beispiel eines Kalibrierverfahrens eines Einzentriersensors 1 in einer Werkzeugmaschine 2 für die Bearbeitung vorverzahnter Werkstücke, zu dessen Ausführung die Werkzeugmaschine gemäss einer Ausführungsform der vorliegenden Erfindung ausgebildet ist. Zunächst wird im Koordinatensystem K_{M} des Werkzeugträgers eine Messachse A_{M} und eine Messdistanz d definiert 101, sowie der Kalibierort C_{M} ermittelt 102, an welchem das Kalibierstück 10 angeordnet ist. Anschliessend wird der Einzentriersensor 1 auf eine Stirnfläche F des Kalibrierstücks zubewegt 200 und dabei ein Spitzenschaltpunkt S des Schaltbereichs B ermittelt 201. Dann wird der Einzentriersensor 1 derart positioniert, dass die Einzentriersensoroberfläche O um die Messdistanz d von der Stirnfläche des Kalibrierstücks 10 beabstandet ist 202. Nun wird der Einzentriersensor 1 entlang des Kalibrierstücks 10 bewegt, um diesen berührungslos abzutasten 203. Währenddessen gibt der Einzentriersensor 1 Schaltsignale aus, aus denen Flankenschaltpunkte ermittelt werden 204. Aus diesen Flankenschaltpunkte wird anschliessend eine fiktive Sensorachse A_{S} ermittelt 205. In einem letzten Schritt 206 wird der Einzentriersensor 1 in eine von der Sensorsteuerung 3 berechnete Werkstückmessposition P_{W} gebracht, in welcher die ermittelte fiktive Sensorachs A_{S} mit der Messachse A_{M} zusammenfällt.

**BEZUGSZEICHENLISTE**

| | | | |
|---|---|---|---|
| 1 | Einzentriersensor | 271 | Anschlagelement |
| 2 | Werkzeugmaschine | 28 | Bearbeitungswerkzeug |
| 3 | Sensorsteuerung | 30 | Tastmittel |
| 10 | Kalibrierstück | 31 | Speicher |
| 11,11' | erste Nut | K_{M} | Koordinatensystem des Werkstückträgers |
| 12,12' | zweite Nut | | |
| 13,13' | Kalibrierzahn | C_{M} | Kalibrierort |
| 14 | Vorsprung | P_{W} | Werkstückmessposition |
| 15 | Orientierungsfläche | P_{C} | Kalibrierposition |
| 16 | Zylinderachse | A | Werkstückspindelachse |
| 17 | quaderförmiger Träger | A_{M} | Messachse |
| 20 | Werkstückträger | A_{S} | fiktive Sensorachse |
| 21 | Werkstückspindel | B | Schaltbereich |
| 211 | Werkstückspindelgehäuse | d | Messdistanz |
| 212 | Werkstückspindelwelle | F | Stirnfläche |
| 22 | Spannmittel | O | Einzentriersensoroberfläche |
| 23 | Werkstück | G | Schaltgrenzfläche |
| 24 | Werkzeugträger | S | Spitzenschaltpunkt |
| 241 | Werkzeugspindel | S_{Z} | Zentralpunkt |
| 25 | Sensorpositioniervorrichtung | S_{F1},S_{F2} | Flankenschaltpunkte |
| 251 | Sensorpositionierarm | k₁,k₂ | Kanten |
| 26 | Sensorhalterung | | |
| 27 | Sensorträger | | |

## Patentansprüche

1. Werkzeugmaschine für die Bearbeitung vorverzahnter Werkstücke, aufweisend:
einen Werkstückträger (20);
eine auf dem Werkstückträger (20) angeordnete Werkstückspindel (21), welche eine Werkstückspindelachse (A) definiert, wobei die Werkstückspindel (21) ein Werkstückspindelgehäuse (211) und eine im Werkstückspindelgehäuse (211) um die Werkstückspindelachse (A) rotierbare Werkstückspindelwelle (212) zum rotatorischen Antrieb eines zu bearbeitenden vorverzahnten Werkstücks (23) aufweist;
einen Einzentriersensor (1), welcher dazu ausgebildet ist, eine Phasenlage von Zähnen des Werkstücks (23) zu ermitteln, wenn das Werkstück (23) um die Werkstückspindelachse (A) rotiert,
**dadurch gekennzeichnet, dass** die Werkzeugmaschine (2) ausserdem aufweist:
ein Kalibrierstück (10), das sich an einem definierten Kalibierort (C_{M}) relativ zur Werkstückspindel (21) befindet;
eine Sensorsteuerung (3), die dazu ausgebildet ist, folgendes Verfahren auszuführen:
Bewegen des Einzentriersensors (1) relativ zur Werkstückspindel (21) in eine Kalibrierposition (P_{C}), in der sich der Einzentriersensor (1) beim Kalibrierstück (10) befindet;
Ermitteln eines Ansprechverhaltens des Einzentriersensors (1), indem die Sensorsteuerung (3) den Einzentriersensor (1) relativ zum Kalibrierstück (10) bewegt und währenddessen Sensorkalibriersignale des Einzentriersensors (1) aufnimmt, und
Bewegen des Einzentriersensors (1) in eine Werkstückmessposition (P_{W}), in der sich der Einzentriersensor (1) beim Werkstück (23) befindet, wobei die Werkstückmessposition (P_{W}) vom ermittelten Ansprechverhalten abhängt.

2. Werkzeugmaschine nach Anspruch 1, wobei das Bewegen des Einzentriersensors (1) relativ zum Kalibrierstück (10) Bewegungen in eine axiale Richtung und/oder in eine radiale Richtung und/oder in eine tangentiale Richtung bezüglich der Werkstückspindel (21) beinhaltet.

3. Werkzeugmaschine nach Anspruch 1 oder 2, wobei das Kalibrierstück (10) am Werkstückträger (20) angeordnet ist, oder
wobei das Kalibrierstück (10) an einem feststehenden Teil der Werkstückspindel (21), insbesondere am Werkstückspindelgehäuse (211), angeordnet ist, oder
wobei das Kalibrierstück (10) an einem rotierbaren Teil der Werkstückspindel (21) angeordnet ist, oder
wobei die Werkstückspindel (21) ein Spannmittel (22) zum Aufspannen eines Werkstücks (23) auf der Werkstückspindelwelle (212) aufweist, und wobei das Kalibrierstück (10) am Spannmittel (22) angeordnet ist,
wobei das Kalibrierstück (10) vorzugsweise derart ausgebildet ist, dass es lösbar am Spannmittel (22) befestigbar ist,
insbesondere wobei das Kalibrierstück (10) derart ausgebildet ist, dass es durch eine automatische Werkstückbeladevorrichtung auf dem Spannmittel (22) anbringbar und vom Spannmittel (22) entfernbar ist.

4. Werkzeugmaschine nach einem der vorhergehenden Ansprüche, wobei das Kalibrierstück (10) einen im Wesentlichen quaderförmigen Grundkörper aufweist,
insbesondere wobei der Grundkörper des Kalibrierstücks eine erste Nut (11) mit vorzugweise rechteckigem oder trapezförmigem Querschnitt aufweist und wobei das Kalibrierstück (10) vorzugsweise derart in der Werkzeugmaschine angeordnet ist, dass die erste Nut (11) im Grundkörper des Kalibrierstücks (10) senkrecht zur Werkstückspindelachse (A) verläuft, und
wobei der Grundkörper des Kalibrierstücks optional eine zweite Nut (12) mit vorzugweise rechteckigem oder trapezförmigem Querschnitt aufweist, welche in einem Winkel, vorzugsweise senkrecht, zur ersten Nut (11) verläuft und in die erste Nut (11) mündet.

5. Werkzeugmaschine nach einem der Ansprüche 1-3, wobei das Kalibrierstück (10) einen quaderförmigen Vorsprung (14) aufweist, welcher sich von einer Oberfläche eines Teils der Werkstückspindel (21) radial erstreckt,
wobei der quaderförmige Vorsprung (14) von zwei Orientierungsflächen (15) flankiert ist, und wobei die flankierenden Orientierungsflächen (15) bezüglich einer tangentialen Richtung beidseitig zum Vorsprung (14) angeordnet sind.

6. Werkzeugmaschine nach einem der Ansprüche 1-3, wobei das Kalibierstück (10) einen zylinderförmigen Grundkörper oder einen kugelförmigen Grundkörper oder einen kalottenförmigen Grundkörper aufweist.

7. Werkzeugmaschine nach einem der Ansprüche 1-3, wobei das Kalibrierstück (10) scheibenförmig ist und ein Aussenprofil mit mindestens einer Zahnstruktur, insbesondere einem Kalibrierzahn (13), aufweist,
insbesondere wobei das Kalibrierstück (10) ein zu bearbeitendes Werkstück ist.

8. Werkzeugmaschine nach einem der vorhergehenden Ansprüche, wobei die Werkzeugmaschine (2) ein Tastmittel (30) aufweist,
wobei das Tastmittel (30) dazu ausgebildet ist, das Kalibrierstück (10) zu vermessen, um einen definierten Kalibrierort (C_{M}) zu erhalten.

9. Werkzeugmaschine nach einem der vorhergehenden Ansprüche, wobei die Werkzeugmaschine einen Werkzeugträger (24) aufweist, an dem eine Werkzeugspindel (241) zum rotatorischen Antrieb eines Bearbeitungswerkzeugs (27) angeordnet ist, und wobei der Einzentriersensor (1) am Werkzeugträger (24) angeordnet ist.

10. Werkzeugmaschine nach einem der vorhergehenden Ansprüche, wobei die Sensorsteuerung (3) dazu ausgebildet ist, das Bewegen des Einzentriersensors (1) relativ zur Werkstückspindel (21) durch Bewegungen des Werkzeugträgers (24) relativ zur Werkstückspindel (21) zu bewirken.

11. Werkzeugmaschine nach einem der vorhergehenden Ansprüche, wobei die Werkzeugmaschine (2) eine Sensorpositioniervorrichtung (25) zur Positionierung des Einzentriersensors (1) aufweist, welche am Werkzeugträger (24) angeordnet ist und gemeinsam mit dem Werkzeugträger (24) relativ zur Werkstückspindel (21) bewegbar ist, wobei die Sensorpositioniervorrichtung (25) dazu ausgebildet ist, den Einzentriersensor (1) relativ zum Werkzeugträger (24) zu bewegen, und wobei die Sensorsteuerung (3) dazu ausgebildet ist, das Bewegen des Einzentriersensors (1) relativ zur Werkstückspindel (21) durch Bewegungen des Werkzeugträgers (24) relativ zur Werkstückspindel (21) und/oder durch Bewegungen der Sensorpositioniervorrichtung (25) relativ zum Werkzeugträger (24) zu bewirken, wobei die Sensorpositioniervorrichtung (25) optional einen Sensorpositionierarm (251) aufweist, der relativ zum Werkzeugträger (24) bewegbar, insbesondere linear verschiebbar, ist, und
wobei die Sensorpositioniervorrichtung (25) optional einen Sensorhalter (26) zum Aufnehmen eines Sensorträgers (27) aufweist,
wobei der Sensorträger (27) ein Anschlagelement (271) aufweist,
wobei der Einzentriersensor (1) eine Einzentriersensoroberfläche (O) aufweist, und wobei der Einzentriersensor (1) im Sensorträger (27) derart montiert ist, dass die Einzentriersensoroberfläche (O) in einem definierten Abstand (e) zum Anschlagelement (271) liegt.

12. Werkzeugmaschine nach einem der vorhergehenden Ansprüche,
wobei der Einzentriersensor (1) ein induktiver Einzentriersensor ist, und
wobei das Kalibrierstück (10) aus einem elektrisch leitenden Material, insbesondere Stahl oder Stahlguss oder Aluminium, besteht, und/oder eine elektrisch leitende Oberfläche aufweist, oder
wobei der Einzentriersensor (1) ein kapazitiver Einzentriersensor ist, und
wobei das Kalibrierstück (10) aus einem dielektrischen Material besteht und/oder eine Oberfläche aus einem dielektrischen Material aufweist.

13. Werkzeugmaschine nach einem der vorhergehenden Ansprüche,
wobei der Einzentriersensor (1) dazu ausgebildet ist, ein Schaltsignal auszugeben,
wobei der Einzentriersensor (1) einen sensorspezifischen Schaltbereich (B) aufweist, und
wobei der sensorspezifische Schaltbereich (B) eine fiktive Sensorachse (A_{S}) definiert,
wobei der Kalibrierort (C_{M}) des Kalibrierstücks (10) in einem Koordinatensystem (K_{M}) des Werkstückträgers (2) bekannt ist,
wobei die Sensorsteuerung (3) dazu ausgebildet ist, durch die Ermittlung des Ansprechverhaltens des Einzentriersensors (1) am Kalibrierstück (10) die fiktive Sensorachse (A_{S}) zu ermitteln, und
wobei die Sensorsteuerung (3) weiter dazu ausgebildet ist, die Werkstückmessposition (P_{W}) aus dem bekannten Kalibrierort (C_{M}) des Kalibrierstücks (10), einer vordefinierten Messachse (A_{M}) und der ermittelten fiktiven Sensorachse (A_{S}) derart zu berechnen, dass die ermittelte fiktive Sensorachse (A_{S}) mit der vordefinierten Messachse (A_{M}) zusammenfällt, wenn sich der Einzentriersensor (1) in der berechneten Werkstückmessposition (P_{W}) befindet.

14. Werkzeugmaschine nach Anspruch 13,
wobei die Sensorsteuerung (3) zur Ermittlung des Ansprechverhaltens des Einzentriersensors (1) dazu ausgebildet ist, einen Spitzenschaltpunkt (S) des Schaltbereichs (B) in einem Koordinatensystem (K_{M}) des Werkstückträgers (2) zu ermitteln, indem der Einzentriersensor (1) in normaler Richtung auf eine Stirnfläche (F) des Kalibrierstücks (10) zubewegt wird.

15. Werkzeugmaschine nach Anspruch 13 oder 14, wobei der Kalibrierort (C_{M}) des Kalibrierstücks (10) und die vordefinierte Messachse (A_{M}) in einem Speicher (31) der Sensorsteuerung (3) hinterlegt sind und das Verfahren automatisiert durchgeführt wird.

## Claims

1. A machine tool for machining pre-toothed workpieces, comprising:
a workpiece carrier (20);
a workpiece spindle (21) arranged on the workpiece carrier (20) and defining a workpiece spindle axis (A), the workpiece spindle (21) having a workpiece spindle housing (211) and a workpiece spindle shaft (212) rotatable in the workpiece spindle housing (211) about the workpiece spindle axis (A) for rotationally driving a pre-toothed workpiece (23) to be machined;
a meshing sensor (1) configured to detect a phase position of teeth of the workpiece (23) when the workpiece (23) rotates about the workpiece spindle axis (A),
**characterized in that** the machine tool (2) further comprises:
a calibration piece (10) located at a defined calibration point (C_{M}) relative to the workpiece spindle (21); and
a sensor controller (3) configured to carry out the following method:
moving the meshing sensor (1) relative to the workpiece spindle (21) to a calibration position (P_{C}) in which the meshing sensor (1) is located at the calibration piece (10);
determining a response behavior of the meshing sensor (1) by the sensor controller (3) moving the meshing sensor (1) relative to the calibration piece (10) while receiving sensor calibration signals of the meshing sensor (1), and
moving the meshing sensor (1) to a workpiece measuring position (P_{W}) in which the meshing sensor (1) is located at the workpiece (23), wherein the workpiece measuring position (P_{W}) depends on the determined response behavior.

2. The machine tool according to claim 1, wherein moving the meshing sensor (1) relative to the calibration piece (10) includes movements in an axial direction and/or in a radial direction and/or in a tangential direction with respect to the workpiece spindle (21).

3. The machine tool according to claim 1 or 2, wherein the calibration piece (10) is arranged on the workpiece carrier (20), or
wherein the calibration piece (10) is arranged on a stationary part of the workpiece spindle (21), in particular on the workpiece spindle housing (211), or
wherein the calibration piece (10) is arranged on a rotatable part of the workpiece spindle (21), or
wherein the tool spindle (21) has a clamping means (22) for clamping a workpiece (23) on the workpiece spindle shaft (212), and wherein the calibration piece (10) is arranged on the clamping means (22),
wherein the calibration piece (10) is preferably configured such that it can be detachably fastened to the clamping means (22),
in particular, wherein the calibration piece (10) is configured such that it is attachable to and removable from the clamping means (22) by an automatic workpiece loading device.

4. The machine tool according to any one of the preceding claims, wherein the calibration piece (10) has a substantially cuboid base body,
in particular wherein the base body of the calibration piece has a first groove (11) with preferably rectangular or trapezoidal cross-section, and wherein the calibration piece (10) is preferably arranged in the machine tool such that the first groove (11) in the base body of the calibration piece (10) runs perpendicular to the workpiece spindle axis (A), and
wherein the base body of the calibration piece optionally has a second groove (12) with preferably rectangular or trapezoidal cross-section, which runs at an angle, preferably perpendicular, to the first groove (11) and opens into the first groove (11).

5. The machine tool according to any one of claims 1-3, wherein the calibration piece (10) has a cuboid projection (14) extending radially from a surface of a portion of the workpiece spindle (21),
wherein the cuboid projection (14) is flanked by two orientation areas (15), and wherein the flanking orientation areas (15) are arranged on both sides of the projection (14) with respect to a tangential direction.

6. The machine tool according to any one of claims 1-3, wherein the calibrating piece (10) has a cylindrical base body or a spherical base body or a dome-shaped base body.

7. The machine tool according to any one of claims 1-3, wherein the calibration piece (10) is disc-shaped and has an outer profile with at least one tooth structure, in particular a calibration tooth (13),
in particular wherein the calibration piece (10) is a workpiece to be machined.

8. The machine tool according to any one of the preceding claims, wherein the machine tool (2) comprises a tactile sensor (30),
wherein the tactile sensor (30) is adapted to measure the calibration piece (10) to obtain a defined calibration point (C_{M}).

9. The machine tool according to one of the preceding claims, wherein the machine tool has a tool carrier (24) on which a tool spindle (241) for rotationally driving a machining tool (27) is arranged, and wherein the meshing sensor (1) is arranged on the tool carrier (24).

10. The machine tool according to one of the preceding claims, wherein the sensor controller (3) is configured to cause the movement of the meshing sensor (1) relative to the workpiece spindle (21) by movements of the tool carrier (24) relative to the workpiece spindle (21).

11. The machine tool according to one of the preceding claims, wherein the machine tool (2) comprises a sensor positioning device (25) for positioning the meshing sensor (1), which is arranged on the tool carrier (24) and is movable together with the tool carrier (24) relative to the workpiece spindle (21), wherein the sensor positioning device (25) is configured to move the meshing sensor (1) relative to the tool carrier (24), and wherein the sensor controller (3) is configured to effect the movement of the meshing sensor (1) relative to the workpiece spindle (21) by movements of the tool carrier (24) relative to the workpiece spindle (21) and/or by movements of the sensor positioning device (25) relative to the tool carrier (24), wherein the sensor positioning device (25) comprises a sensor positioning arm (251) which is movable, in particular linearly displaceable, relative to the tool carrier (24), and
wherein the sensor positioning device (25) optionally comprises a sensor holder (26) for receiving a sensor carrier (27),
wherein the sensor carrier (27) comprises a stop element (271),
wherein the meshing sensor (1) has a meshing sensor surface (O), and wherein the meshing sensor (1) is mounted in the sensor carrier (27) such, that the meshing sensor surface (O) is at a defined distance (e) from the stop element (271).

12. The machine tool according to any one of the preceding claims,
wherein the meshing sensor (1) is an inductive meshing sensor, and
wherein the calibration piece (10) consists of an electrically conductive material, in particular steel or cast steel or aluminum, and/or has an electrically conductive surface, or
wherein the meshing sensor (1) is a capacitive meshing sensor, and
wherein the calibration piece (10) consists of a dielectric material and/or has a surface made of a dielectric material.

13. The machine tool according to any one of the preceding claims,
wherein the meshing sensor (1) is configured to output a switching signal,
wherein the meshing sensor (1) has a sensor-specific switching region (B), and
wherein the sensor-specific switching region (B) defines a fictitious sensor axis (A_{S}),
wherein the calibration point (C_{M}) of the calibration piece (10) in a coordinate system (K_{M}) of the workpiece carrier (2) is known,
wherein the sensor controller (3) is configured to determine the fictitious sensor axis (A_{S}) by determining the response behavior of the meshing sensor (1) on the calibration piece (10),
wherein the sensor controller (3) is further configured to calculate the workpiece measuring position (P_{W}) from the known calibration point (C_{M}) of the calibration piece (10), a predefined measuring axis (A_{M}) and the determined fictitious sensor axis (A_{S}) in such a way that the determined fictitious sensor axis (A_{S}) coincides with the predefined measuring axis (A_{M}) when the meshing sensor (1) is in the calculated workpiece measuring position (Pw).

14. The machine tool according to claim 13,
wherein the sensor controller (3) for determining the response behavior of the meshing sensor (1) is configured to determine a peak switching point (S) of the switching region (B) in a coordinate system (K_{M} ) of the workpiece carrier (2) by moving the meshing sensor (1) in the normal direction towards an end face (F) of the calibration piece (10).

15. The machine tool according to claim 13 or 14, wherein the calibration point (C_{M}) of the calibration piece (10) and the predefined measuring axis (A_{M}) are stored in a memory (31) of the sensor controller (3) and the method is carried out automatically.

## Revendications

1. Machine-outil pour l'usinage de pièces pré-dentées, présentant :
un porte-pièce (20) ;
une broche porte-pièce (21) disposée sur le porte-pièce (20), qui définit un axe de broche porte-pièce (A), la broche porte-pièce (21) présentant un boîtier de broche porte-pièce (211) et un arbre de broche porte-pièce (212) pouvant tourner dans le boîtier de broche porte-pièce (211) autour de l'axe de broche porte-pièce (A) pour l'entraînement en rotation d'une pièce pré-dentée (23) à usiner ;
un capteur d'engrènement (1) qui est conçu pour déterminer une position de phase de dents de la pièce à usiner (23) lorsque la pièce à usiner (23) tourne autour de l'axe de broche de pièce à usiner (A),
**caractérisé en ce que** la machine-outil (2) comprend en outre
une pièce de calibrage (10) qui se trouve à un emplacement de calibrage défini (C_{M}) par rapport à la broche porte-pièce (21) ;
une commande de capteur (3) qui est conçue pour exécuter le procédé suivant :
déplacer le capteur d'engrènement (1) par rapport à la broche porte-pièce (21) dans une position de calibrage (P_{C}), dans laquelle le capteur d'engrènement (1) se trouve près de la pièce de calibrage (10)
déterminer une réponse du capteur d'engrènement (1), **en ce que** la commande de capteur (3) déplace le capteur d'engrènement (1) par rapport à la pièce de calibrage (10) et enregistre pendant ce temps des signaux de calibrage de capteur du capteur d'engrènement (1), et
déplacer le capteur d'engrènement (1) dans une position de mesure de pièce (P_{W}), dans laquelle le capteur d'engrènement (1) se trouve près de la pièce (23), la position de mesure de pièce (P_{W}) dépendant du comportement de réponse déterminé.

2. Machine-outil selon la revendication 1, dans laquelle le déplacement du capteur d'engrènement (1) par rapport à la pièce de calibrage (10) comprend des mouvements dans une direction axiale et/ou dans une direction radiale et/ou dans une direction tangentielle par rapport à la broche porte-pièce (21).

3. Machine-outil selon la revendication 1 ou 2, la pièce de calibrage (10) étant disposée sur le porte-pièce (20), ou
la pièce de calibrage (10) étant disposée sur une partie fixe de la broche porte-pièce (21), en particulier sur le boîtier de broche porte-pièce (211), ou
la pièce de calibrage (10) étant disposée sur une partie rotative de la broche porte-pièce (21), ou
la broche porte-pièce (21) présentant un moyen de serrage (22) pour serrer une pièce à usiner (23) sur l'arbre de broche porte-pièce (212), et la pièce de calibrage (10) étant disposée sur le moyen de serrage (22),
la pièce de calibrage (10) étant de préférence conçue de telle sorte qu'elle puisse être fixée de manière amovible au moyen de serrage (22),
en particulier dans lequel la pièce de calibrage (10) est conçue de telle sorte qu'elle puisse être placée sur le moyen de serrage (22) et retirée du moyen de serrage (22) par un dispositif de chargement automatique de pièces.

4. Machine-outil selon l'une quelconque des revendications précédentes, dans laquelle la pièce de calibrage (10) présente un corps de base sensiblement en forme de parallélépipède rectangle,
le corps de base de la pièce de calibrage présentant en particulier une première rainure (11) de préférence de section rectangulaire ou trapézoïdale et la pièce de calibrage (10) étant de préférence disposée dans la machine-outil de telle sorte que la première rainure (11) dans le corps de base de la pièce de calibrage (10) s'étende perpendiculairement à l'axe de la broche porte-pièce (A), et
le corps de base de la pièce de calibrage présentant en option une deuxième rainure (12) de préférence de section rectangulaire ou trapézoïdale, qui s'étend selon un angle, de préférence perpendiculaire, par rapport à la première rainure (11) et débouche dans la première rainure (11).

5. Machine-outil selon l'une quelconque des revendications 1 à 3, dans laquelle la pièce de calibrage (10) comprend une saillie en forme de parallélépipède rectangle (14) s'étendant radialement depuis une surface d'une partie de la broche porte-pièce (21),
la saillie en forme de parallélépipède rectangle (14) étant flanquée de deux surfaces d'orientation (15), les surfaces d'orientation flanquantes (15) étant disposées des deux côtés de la saillie (14) par rapport à une direction tangentielle.

6. Machine-outil selon l'une des revendications 1 à 3, dans laquelle la pièce de calibrage (10) présente un corps de base cylindrique ou un corps de base sphérique ou un corps de base en forme de calotte.

7. Machine-outil selon l'une des revendications 1 à 3, dans laquelle la pièce de calibrage (10) est en forme de disque et présente un profil extérieur avec au moins une structure dentée, notamment une dent de calibrage (13),
en particulier dans lequel la pièce de calibrage (10) est une pièce à usiner.

8. Machine-outil selon l'une quelconque des revendications précédentes, dans laquelle la machine-outil (2) comporte un moyen de palpage (30),
le moyen de palpage (30) étant conçu pour mesurer la pièce de calibrage (10) afin d'obtenir un emplacement de calibrage défini (C_{M}).

9. Machine-outil selon l'une quelconque des revendications précédentes, dans laquelle la machine-outil comporte un porte-outil (24) sur lequel est disposée une broche porte-outil (241) pour l'entraînement en rotation d'un outil d'usinage (27), et dans laquelle le capteur d'engrènement (1) est disposé sur le porte-outil (24).

10. Machine-outil selon l'une quelconque des revendications précédentes, dans laquelle la commande de capteur (3) est conçue pour causer le déplacement du capteur d'engrènement (1) par rapport à la broche porte-pièce (21) par des mouvements du porte-outil (24) par rapport à la broche porte-pièce (21).

11. Machine-outil selon l'une quelconque des revendications précédentes, dans laquelle la machine-outil (2) comporte un dispositif de positionnement de capteur (25) pour positionner le capteur d'engrènement (1), qui est disposé sur le porte-outil (24) et qui est mobile par rapport à la broche porte-pièce (21) conjointement avec le porte-outil (24), le dispositif de positionnement de capteur (25) étant conçu pour déplacer le capteur d'engrènement (1) par rapport au porte-outil (24), et la commande de capteur (3) étant conçue pour provoquer le déplacement du capteur d'engrènement (1) par rapport à la broche porte-pièce (21) par des mouvements du porte-outil (24) par rapport à la broche porte-pièce (21) et/ou par des mouvements du dispositif de positionnement de capteur (25) par rapport au porte-outil (24), le dispositif de positionnement de capteur (25) présentant en option un bras de positionnement de capteur (251) qui est mobile par rapport au porte-outil (24), en particulier déplaçable linéairement, et
le dispositif de positionnement de capteur (25) comprenant en option un support de capteur (26) pour recevoir un support de capteur (27),
le support de capteur (27) présentant un élément de butée (271),
le capteur d'engrènement (1) présentant une surface de capteur d'engrènement (O), et le capteur d'engrènement (1) étant monté dans le support de capteur (27) de telle sorte que la surface de capteur d'engrènement (O) se trouve à une distance définie (e) de l'élément de butée (271).

12. Machine-outil selon l'une quelconque des revendications précédentes,
le capteur d'engrènement (1) étant un capteur d'engrènement inductif, et
la pièce de calibrage (10) étant constituée d'un matériau électriquement conducteur, en particulier de l'acier ou de l'acier moulé ou de l'aluminium, et/ou présentant une surface électriquement conductrice, ou
le capteur d'engrènement (1) étant un capteur d'engrènement capacitif, et
la pièce de calibrage (10) étant constituée d'un matériau diélectrique et/ou présentant une surface constituée d'un matériau diélectrique.

13. Machine-outil selon l'une quelconque des revendications précédentes,
le capteur d'engrènement unique (1) étant conçu pour émettre un signal de commutation,
le capteur d'engrènement unique (1) présentant une zone de commutation (B) spécifique au capteur, et
la zone de commutation (B) spécifique au capteur définissant un axe de capteur fictif (A_{S}),
l'emplacement de calibrage (C_{M}) de la pièce de calibrage (10) étant connu dans un système de coordonnées (K_{M}) du porte-pièce (2),
la commande de capteur (3) étant conçue pour déterminer l'axe de capteur fictif (A_{S}) par la détermination du comportement de réponse du capteur d'engrènement (1) au moyen de la pièce de calibrage (10), et
la commande de capteur (3) étant en outre conçue pour calculer la position de mesure de pièce (P_{W}) à partir de l'emplacement de calibrage connu (C_{M}) de la pièce de calibrage (10), d'un axe de mesure prédéfini (A_{M}) et de l'axe de capteur fictif déterminé (A_{S}) de telle sorte, que l'axe de capteur fictif déterminé (A_{S}) coïncide avec l'axe de mesure prédéfini (A_{M}) lorsque le capteur d'engrènement (1) se trouve dans la position de mesure de pièce calculée (P_{W}).

14. Machine-outil selon la revendication 13,
la commande de capteur (3) étant conçue, afin de déterminer le comportement de réponse du capteur d'engrènement (1), pour déterminer un point de commutation de pointe (S) de la zone de commutation (B) dans un système de coordonnées (K_{M}) du porte-pièce (2), en déplaçant le capteur d'engrènement (1) dans la direction normale vers une surface frontale (F) de la pièce de calibrage (10).

15. Machine-outil selon la revendication 13 ou 14, dans laquelle l'emplacement de calibrage (C_{M}) de la pièce de calibrage (10) et l'axe de mesure prédéfini (A_{M}) sont enregistrés dans une mémoire (31) de la commande de capteur (3) et le procédé est exécuté de manière automatisée.
